(19) Europäisches Patentamt
European Patent Office
Office européen des brevets

(11) Veröffentlichungsnummer: **0 019 126**
**A2**

(12)

# EUROPÄISCHE PATENTANMELDUNG

(21) Anmeldenummer: 80102270.8

(22) Anmeldetag: 26.04.80

(51) Int. Cl.$^3$: **C 08 L 69/00**

(30) Priorität: 10.05.79 DE 2918882

(43) Veröffentlichungstag der Anmeldung: 26.11.80 Patentblatt 80/24

(84) Benannte Vertragsstaaten: DE FR GB IT NL

(71) Anmelder: BAYER AG
Zentralbereich Patente, Marken und Lizenzen
D-5090 Leverkusen 1, Bayerwerk(DE)

(72) Erfinder: Schmidt, Manfred, Dr.
Bodelschwinghstrasse 20
D-4150 Krefeld(DE)

(72) Erfinder: Cohnen, Wolfgang, Dr.
Heymannstrasse 36
D-5090 Leverkusen(DE)

(72) Erfinder: Druschke, Frank, Dr.
Germaniastrasse 101
D-4150 Krefeld(DE)

(54) **Flammwidrige Polycarbonat-Legierungen mit erhöhter Wärmeformbeständigkeit, ihre Herstellung und Verwendung.**

(57) Gegenstand der Erfindung sind Formmassen, bestehend aus

a) thermoplastichen, aromatischen Polycarbonaten,
b) einer organischen Halogenverbindung,
c) einem Alkali- oder Erdalkalisalz, einer anorganischen Brönsted-Säure mit mindestens einem Kohlenstoffatom,
d) einem Stoff, der die Abtropfneigung von Polycarbonaten reduziert,

dadurch gekennzeichnet, daß sie

e) weitere Thermoplasten mit einer Wärmeformbeständigkeit, gemessen nach ISO-R/75 von ≥ 175°C (Vicat-B-Temperatur) enthalten,

ihre Herstellung und Verwendung zur Herstellung von Formteilen und Folien.

EP 0 019 126 A2

Croydon Printing Company Ltd.

BAYER AKTIENGESELLSCHAFT
Zentralbereich
Patente, Marken und Lizenzen

5090 Leverkusen, Bayerwerk
PS/lz

# Flammwidrige Polycarbonat-Legierungen mit erhöhter Wärmeformbeständigkeit, ihre Herstellung und Verwendung

Gegenstand der vorliegenden Erfindung sind Formmassen bestehend aus

a) thermoplastischen aromatischen Polycarbonaten auf Basis von Bis-hydroxyaryl-alkanen, -cycloalkanen, 4,4'-Dihydroxydiphenyläther oder 4,4'-Dihydroxydiphenylsulfid,

b) einer organischen Halogenverbindung, vorzugsweise einer aromatischen organischen Halogenverbindung und insbesondere einer Brom- und/oder Chlorverbindung,

c) einem Alkali- oder Erdalkalisalz einer anorganischen Protonensäure und/oder einer organischen Brönsted-Säure mit mindestens einem Kohlenstoffatom, vorzugsweise einem Alkalisalz, insbesondere einem Li-, Na- oder K-Salz,

d) einem Stoff, der die Abtropfneigung von Polycarbonaten reduziert, wie beispielweise Polytetrafluoräthylene, Polysiloxane oder Glasfasern,

die dadurch gekennzeichnet sind, daß sie

e) einen weiteren Thermoplasten mit einer Wärmeformbeständigkeit, gemessen nach ISO-R/75 von ≥ 175 °C (Vicat B-Temperatur) enthalten, wobei als weitere Thermoplaste

beispielsweise

e1) Polyarylensulfone, vorzugsweise Polyphenylensulfone,

e2) Poly-arylenethersulfone, vorzugsweise Poly-phenylenether-sulfone,

e3) Poly-arylensulfide, vorzugsweise Polyphenylensulfide,

e4) Polycarbonate auf Basis von Tetramethylbisphenolen,

e5) Polycarbonate auf Basis von 4,4'-Dihydroxydiphenylsulfon,

e6) aromatische Polyamide auf Basis von aromatischen Polycarbonsäuren und aromatischen Polyaminen,

e7) aromatische Polyimide auf Basis von Dianhydriden aromatischer Tetracarbonsäuren und aromatischen Polyaminen, oder

e8) aromatische Polyester auf Basis von aromatischen Polycarbonsäuren und Polyphenolen

Verwendung finden können.

Die Verbesserung der Flammwidrigkeit von thermoplastischen Polycarbonaten läßt sich in bekannter Weise durch den Zusatz oder die Einarbeitung von Halogenverbindungen, Salzen organischer oder anorganischer Säuren, wie insbesonders Alkalisalzen und gegebenenfalls einem Stoff, der die Abtropfneigung von Polycarbonaten im Brandfall unterdrückt, erreichen, wie dies beispielsweise in der DOS 21 48 598 (Le A 13 970) und in der DOS 27 03 710 (Le A 17 759) beschrieben ist.

Gegenstand der vorliegenden Erfindung sind flammwidrige Polymerlegierungen für den Einsatz im Hochtemperaturbereich. Die erfindungsgemäßen Polymerlegierungen werden erhalten durch Zumischen geeigneter anderer Thermoplasten zu flammwidrigen Polycarbonat-Formmassen, wodurch flammwidrige Polycarbonatlegierungen mit einer gegenüber reinem Polycarbonat erhöhten Wärmeformbeständigkeit erhalten werden.

a) Als die den erfindungsgemäßen flammwidrigen Polycarbonatlegierungen zugrundeliegenden thermoplastischen aromatischen Polycarbonate werden Homopolycarbonate und/oder Copolycarbonate aus Bis-(hydroxyaryl)-alkanen und/oder Bis-(hydroxyaryl)-cycloalkanen und/oder Bis-(4-hydroxyphenyl)-äther und/oder Bis-(4-hydroxyphenyl)-sulfid verstanden; als Hydroxyaryl-Reste sind in diesem Zusammenhang insbesondere Hydroxylphenyl-Reste, und ganz besonders 4-Hydroxyphenyl-Reste zu verstehen, die noch zusätzlich Substituenten tragen können. Als Alkane sind vorzugsweise $C_1$-$C_5$-Alkylidene und $C_1$-$C_5$-Alkylene, als Cycloalkane sind vorzugsweise $C_5$-$C_{10}$-Cycloalkylidene- und $C_5$-$C_{10}$-Cycloalkylene zu verstehen.

Den erfindungsgemäß geeigneten Polycarbonaten können eines oder mehrere der folgenden Diphenole zugrunde liegen:

2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
4,4'-Dihydroxydiphenyläther und
4,4'-Dihydroxydiphenylsulfid.

Diese und weitere geeignete Diphenole sind z.B. in der US-Patentschrift 3 038 365, in der deutschen Offenlegungsschriften 1 570 703, 2 063 050 und in der Monographie "H. Schnell, Chemistry and Physics of Polycarbonates, Interscience Publishers, New York, 1964" beschrieben.

Bevorzugte Diphenole sind z.B.:

2,2-Bis-(4-hydroxyphenyl)-propan
1,1-Bis-(4-hydroxyphenyl)-cyclohexan
α,α'-Bis-(4-hydroxyphenyl)-p-diisopropylbenzol
und 4,4'-Dihydroxydiphenylsulfid.

Bevorzugte aromatische Polycarbonate sind solche, denen ein oder mehrere der als bevorzugt genannten Diphenole zugrunde liegen. Besonders bevorzugt werden Copolycarbonate, denen 2,2-Bis-(4-hydroxyphenyl)-propan und eines der anderen als bevorzugt genannten Diphenole zugrundeliegen. Besonders bevorzugt sind weiterhin Polycarbonate allein auf Basis von 2,2-Bis-(4-hydroxyphenyl)-propan.

Die aromatischen Polycarbonate können nach bekannten Verfahren hergestellt werden, so z.B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschrieben ist.

Die aromatischen Polycarbonate können durch den Einbau geringer Mengen, vorzugsweise von Mengen zwischen 0,05 und 2,0 Mol-% (bezogen auf eingesetzte Diphenole) an drei- oder mehr als dreifunktionellen Verbindungen, insbesondere solchen mit drei oder mehr als drei phenolischen Hydroxygruppen, verzweigt sein.

Polycarbonate dieser Art sind z.B. in den deutschen Offenlegungsschriften 1 570 533, 1 595 762, 2 116 974,

2 113 347 und 2 500 092, der britischen Patentschrift 1 079 821 und der US-Patentschrift 3 544 514 beschrieben.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-äthan, Tri-(4-hydroxyphenyl)-phenylmethan, 2,2-Bis-[4,4-Bis-(4-hydroxyphenyl)-cyclohexyl]-propan, 2,4-Bis-(4-hydroxyphenyl-isopropyl)-phenol, 2,6-Bis-(2'-hydroxy-5'-methyl-benzyl)-4-methylphenol, 2-(4-hydroxyphenyl)-2-(2,4-dihydroxyphenyl)-propan und 1,4-Bis-(4',4"-dihydroxy-triphenyl-methyl)-benzol. Einige der sonstigen dreifunktionellen Verbindungen sind 2,4-Dihydroxybenzoesäure, Trimesinsäure, Cyanurchlorid, 3,3-Bis-(4-hydroxyphenyl)-2-oxo-2,3-dihydroindol und 3,3-Bis-(3-methyl-4-hydroxyphenyl)-2-oxo-2,3-dihydroindol.
Die thermoplastischen aromatischen Polycarbonate sollen in der Regel mittlere Gewichtsmittel-Molekulargewichte $\bar{M}_w$ von 10.000 bis über 200.000, vorzugsweise von 20.000 bis 80.000 haben. Alle im folgenden angegebenen Molekulargewichte sind Gewichtsmittel-Molekulargewichte $\bar{M}_w$ und wurden nach der Methode der Lichtzerstreuung ermittelt.

Im Falle der Polycarbonatmischungen können den hochmolekularen Polycarbonaten mit $\bar{M}_w$ von 10.000 bis 200.000 auch kleine Anteile niedermolekularer Polycarbonate, z.B. mit einem mittleren Polymerisationsgrad von 2 - 20, zugemischt sein.

Die den erfindungsgemäßen Polycarbonat-Formmassen der nachfolgenden Beispiele zugrundeliegenden aromatischen Polycarbonate sind Homopolymere des 2,2-Bis-(4-hydroxyphenyl)-propans (nachfolgend als Bisphenol A bezeichnet), die durch Reaktion von im wesentlichen äquimolaren Mengen Bisphenol A und Phosgen nach dem Zweiphasengrenzflächenverfahren mit Natriumhydroxid, Triäthylamin und p-tert.-Butylphenol unter Standardbedingungen hergestellt worden sind.

Die relativen Lösungsviskositäten der Polycarbonate betragen 1,24 bis 1,36, gemessen bei 25°C in einer 0,5 Gew.-%igen Lösung in Methylenchlorid.

b) Organische Halogenverbindungen im Sinne der vorliegenden Erfindung sind:

Aromatische Polycarbonate auf Basis von 2,2-Bis-(3,5-Dibrom-4-hydroxyphenyl)-propan und/oder 2,2-Bis-(3,5-Dichlor-4-hydroxyphenyl)-propan vom Kondensationsgrad 2 - 20 (vgl. DOS 2 243 226).

Andere organische Halogenverbindungen im Sinne der vorliegenden Erfindung sind solche, die sich mit Polycarbonat oder einer anderen Komponente der erfindungsgemäßen Polycarbonatlegierung vermischen lassen und die sich bei den Temperaturen, bei denen das Polycarbonat verarbeitet wird, nicht verflüchtigen. Geeignete organische Halogenverbindungen sind beispielsweise in der DE-OS

1 802 184, US-PS 3 535 300 (Mo 981), der DE-OS 2 744 016, der US-PS 4 110 299 sowie dem japanischen Offenlegungsschriften JA-OS-75-64337 und JA-OS-75-119041 beschrieben.

Als geeignete Halogenverbindungen im Sinne der Erfindung werden beispielsweise verwendet:

Tetrahalogenphthalimide (vgl. DOS 2 703 710)
Decabromdiphenyläther
Pentabromphenoxyäthan
Tribromphenoxyäthan
Decabromdiphenylcarbonat
Decachlordiphenylcarbonat
Tetrabromphthalsäure-di-tribromphenylester oder
Tetrabromphthalsäure-di-trichlorphenylester
Tetrabromterephthalsäure-di-tribromphenylester oder
Tetrabromterephthalsäure-di-trichlorphenylester
Tetrachlorphthalsäure-di-tribromphenylester oder
Tetrachlorphthalsäure-di-trichlorphenylester
Tetrachlorterephthalsäure-di-tribromphenylester oder
Tetrachlorterephthalsäure-di-trichlorphenylester

Geeignete Halogenverbindungen im Sinne der vorliegenden Erfindung sind auch oligomere oder polymere brom- und/ oder chlorhaltige Verbindungen, wie beispielsweise Oligo- oder Polybromstyrole oder Polychlorstyrole (vgl. DOS 26 45 415).

Geeignete Mengen an halogenhaltigen Verbindungen im

Sinne der vorliegenden Erfindung sind 0,01 bis 5 Gew.-% bezogen jeweils auf das Gesamtgewicht der flammwidrigen Polycarbonatlegierung.

Durch Einkondensation geeigneter Mengen halogenhaltiger Bisphenole wie beispielsweise Tetrabrom- oder Tetrachlor-bisphenol A während der Herstellung der den erfindungsgemäßen Formmassen zugrundeliegenden aromatischen Polycarbonate a) kann ebenfalls die Inkorporierung des notwendigen Halogengehaltes in die erfindungsgemäßen Polycarbonatlegierungen erfolgen.

c) Geeignete Alkali- und/oder Erdalkalisalze im Sinne der Erfindung sind beispielsweise solche von anorganischen Protonsäuren. Anorganische Protonsäuren im Sinne der Erfindung sind Brönsted-Säuren, die Alkali- oder Erdalkalisalze bilden können (zum Ausdruck "Brönsted-Säure" vgl. Fieser & Fieser "Organic Chemistry", 1965, S. 595, Interscience publishers N.Y., USA), wie zum Beispiel Schwefelsäure, Fluorwasserstoffsäure, Salzsäure, Bromwasserstoffsäure, meta-, ortho- oder pyro-Phosphorsäure und Protonensäure komplexer Fluormetallverbindungen. Als derartige Alkali- oder Erdalkalisalze komplexer Fluormetallverbindungen können z.B. verwendet werden:

Hexafluoraluminінate
Hexafluortitanate
Hexafluorantimonate
Hexafluorsilikate
Hexafluorwolframate

Hexafluorzirkonate
Hexafluorphosphate
Tetrafluorborate

Geeignete Alkali- oder Erdalkalisalze organischer Säuren sind im Sinne der Erfindung solche von organischen Brönsted-Säuren mit mindestens einem Kohlenstoffatom, die Alkali- oder Erdalkalisalze bilden können.

Solche gegebenenfalls substituierten organischen Säuren können OH- oder NH-acide Verbindungen sein, wie beispielsweise Carbonsäuren, Sulfonsäuren, Phosphonsäuren, Thiophosphonsäuren, NH-acide Sulfonamide oder Sulfonimide, mono- oder mehrfunktionelle Phenole oder Alkohole. Sie müssen mindestens ein C-Atom haben und können vorzugsweise zwischen 2 und 30 C-Atome enthalten.

Geeignete Alkali- oder Erdalkalisalze organischer Brönsted-Säuren sind ebenfalls Salze folgender Substanzklassen:

Phosphorsäureestersalze bzw. Phosphorsäurethioestersalze der allgemeinen Strukturen (I) und (II)

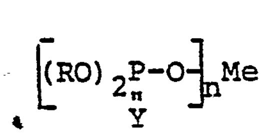

(I) Y = O,S

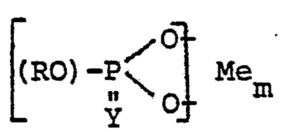

(II) Y = O,S

mit Me = Alkali und n = 1 sowie m = 2; Me = Erdalkali mit n = 2 und m = 1,

R = $C_1$-$C_{20}$-Alkyl, Cycloalkyl, $C_2$-$C_{20}$-Alkenyl, Cycloalkenyl, $C_6$-$C_{18}$-Aryl, wobei der Arylrest gegebenenfalls durch 1-5 Halogenatome wie F, Cl oder Br, durch CN-, $CF_3$- oder $C_1$-$C_{18}$-Alkyl oder Cycloalkyl oder $C_2$-$C_{18}$-Alkenyl oder Cycloalkenylgruppen substituiert sein kann.

Geeignete Alkali- oder Erdalkalisalze im Sinne der Erfindung können auch solche der allgemeinen Struktur (III) sein:

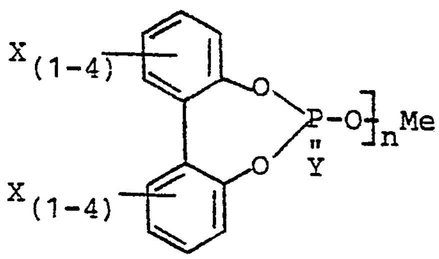

mit Me = Alkali und n = 1
Me = Erdalkali und n = 2
X = F, Cl, Br, CN, $CF_3$

(III) Y = O,S

Weiterhin können Alkali- oder Erdalkalisalze von Phosphonsäureestern der allgemeinen Struktur (IV) verwendet werden:

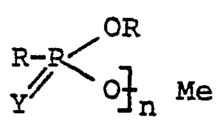

(IV) Y = O,S

mit Me = Alkali und n = 1; Me = Erdalkali und n = 2
R ≙ R der Struktur (I) bzw. (II)

Geeignete Alkalisalze sind die Li-, Na- und K-Salze. Geeignete Erdalkalisalze sind die Calcium-Salze. Die

Salze werden nach der in der DOS 27 03 710 beschriebenen Weise in einer Menge von 0,02 bis 1 Gew.-%, vorzugsweise 0,04 bis 0,5 Gew.-%, bezogen auf das Gesamtgewicht der Polycarbonatlegierung zugegeben.

Weitere geeignete Alkali- und/oder Erdalkalisalze im Sinne der Erfindung sind beispielsweise in den DOS 24 60 935, 24 60 944, 24 60 945, 24 60 946, 24 61 145, 25 35 261, 25 35 262, 25 35 263, 26 31 756, 26 43 256 26 44 114, 26 45 415, 26 46 120, 26 47 271, 26 48 131, 26 53 327, 26 48 128, 27 44 015, 27 44 016, 27 44 017, 27 44 018, 27 45 592, 27 46 906 beschrieben.

Bevorzugte Salze sind die Alkalisalze und darunter wiederum die Li-, Na- und K-Salze.

Die gemäß c) geeigneten Alkalisalze und Erdalkalisalze sollen vorzugsweise einen pH-Wert zwischen 5 und 9, insbesondere zwischen 6,5 und 7,5,haben, gemessen an 1 Gew.%igen Lösungen oder Suspensionen der Salze in Wasser bei 20°C.

d) Geeignete Stoffe, die das Abtropfen von Polycarbonaten insbesondere im Brandfall reduzieren, beziehungsweise ganz unterdrücken, sind im Sinne der Erfindung Stoffe, wie Polytetrafluoräthylene (vgl. DOS 25 35 262), Polysiloxane (vgl. DOS 25 35 261), sowie Glasfasern (vgl. DOS 25 35 263 und DOS 21 48 598). Diese Materialien sind zu 0,01 bis 3 Gew.-%, bezogen auf das Gesamtgewicht der Polycarbonatlegierung, in den erfindungsgemäßen Polycarbonatlegierungen enthalten.

e) Geeignete Polyarylsulfone, insbesondere Polyphenylen-Sulfone im Sinne der Erfindung haben mittlere Gewichtsmittelmolekulargewichte $\overline{M}w$ zwischen 1000 und

200 000, vorzugsweise zwischen 20 000 und 60 000. Beispiele dafür sind die nach bekannten Verfahren durch Friedel-Crafts-Reaktion aus Diphenyl und 4,4'-Bis-(chlorsulfonyl)-diphenyl oder durch Friedel-Crafts-Reaktion aus 4-Chlorsulfonyldiphenyl erhältlichen Polyphenylensulfone.

Eine Untergruppe der Polyarylensulfone sind die Polyarylenäthersulfone mit entsprechenden Gewichtsmittelmolekulargewichten, insbesondere die Polyphenylenäthersulfone. Beispiele dafür sind die nach bekannten Verfahren erhältlichen aus 4,4'-Dichlordiphenylsulfon und einem Bisphenol, insbesondere 2,2-Bis-(4-hydroxyphenyl)-propan, mit mittleren Gewichtsmittelmolekulargewichten $\overline{M}_w$ von 2000 bis 200.000 (vgl. DOS 25 31 240) sowie die nach bekannten Verfahren durch Friedel-Crafts-Reaktion aus Diphenyl und 4,4'-Bis-(chlorsulfonyl)-diphenyläther oder durch Friedel-Crafts-Reaktion aus 4-Chlorsulfonyldiphenyl-äther erhältlichen. Polymere dieser Art sind beispielsweise in "Society of Plastics Engineers" 33 rd annual technical conference, May 5-8, 1975, S. 621-623, beschrieben. Als Polysulfon wurde "Udel 1700" der Firma UCC verwendet (vgl. Beispiele 4 und 5), einem Polysulfon aus 2.2-Bis-(4-hydroxyphenyl)-propan und Bis-(4-chlorphenyl)-sulfon mit einem $\overline{M}_w$ von 42 000.

Geeignete aromatische Polycarbonate auf Basis von Tetramethylbisphenolen, insbesondere auf Basis von 2,2-Bis-(3,5-dimethyl-4-hydroxyphenyl)-propan (="Tetramethylbisphenol A"), im Sinne der Erfindung

haben mittlere Gewichtsmittelmolekulargewichte $\bar{M}_w$ von 10.000 bis 200.000, vorzugsweise von 20.000 bis 80.000 und werden hergestellt beispielsweise nach dem Zweiphasengrenzflächenverfahren aus Phosgen und den entsprechenden Bisphenolen (vgl. DOS 20 63 050) oder auch nach anderen Verfahren (Schmelzumesterungsverfahren, Lösungs- bzw. Pyridinverfahren) (vgl. DOS 26 15 038). Verwendet wurde ein Polycarbonat auf Basis von Tetramethylbisphenol A mit einem Molekulargewicht von $\bar{M}_w$ = 30.000 (vgl. Beispiele 6 und 7).

Gleichfalls geeignete aromatische Polycarbonate sind solche mit einer Vicat B-Temperatur (gemessen nach ISO-R/75 von $\geq 175^{o}C$, z.B. aromatische Copolycarbonate auf Basis von ca. 20 Mol-% 4,4'-Dihydroxydiphenylsulfon und ca. 80 Mol-% anderen Diphenolen, insbesondere Bisphenol A (vgl. DOS 2 116 974).

Geeignete aromatische Polyester im Sinne der Erfindung sind Polyester auf Basis von aromatischen Polycarbonsäuren, insbesondere Dicarbonsäure und Polyphenolen, insbesondere Diphenolen oder solche auf Basis von Phenolcarbonsäuren, insbesondere jedoch solche auf Basis von Iso- und Terephthalsäuregemischen und 2,2-Bis-(4-hydroxyphenyl)-propan; sie sollen eine rel. Lösungsviskosität von $\eta$ rel = 1,15 bis 1,40 (gemessen in 0,5 %iger Lösung in Methylenchlorid) haben. Als aromatischer Polyester wurde "U-Polymer" der Firma Unitika, Japan, verwendet (vgl. Beispiele 8 und 9), ein Polyester auf Basis von Bis-2-(4-hydroxyphenyl)-propan und einem Gemisch aus Iso- und Terephthalsäure im Gewichtsverhältnis 1:1 (Iso- zu Terephthalsäure) mit einem $\overline{M}_w$ von 30 000.

Die geeigneten aromatischen Polyester können hergestellt werden beispielsweise nach dem Zweiphasengrenzflächenverfahren aus Iso- und/oder Terephthalsäuredichlorid und den entsprechenden Bisphenolen (vgl. US-PS 33 51 624) oder auch nach anderen Verfahren (Lösungs- bzw. Pyridinverfahren, Schmelzumesterungsverfahren; vgl. US-PS 31 33 848, 32 34 167).

Geeignete aromatische Polyamide im Sinne der Erfindung sind Polyamide auf Basis von aromatischen Polycarbonsäuren und aromatischen Polyaminen oder solche auf Basis von Aminocarbonsäuren, insbesondere jedoch solche auf Basis von aromatischen Dicarbonsäuren oder deren Gemischen und aromatischen Diaminen wie p- oder m-Phenylendiamin oder deren Gemischen. Die geeigneten aromatischen Polyamide besitzen eine inhärente Viskosität von 0,6 bis 3,0, gemessen bei 30°C in einer 0,5 %igen Lösung in Schwefelsäure. Die Herstellung der aromatischen Polyamide kann beispielsweise gemäß DOS 14 20 681 durch Umsetzung der Dihalogenide aromatischer Dicarbonsäuren mit aromatischen Diaminen in Gegenwart von Lösungsmitteln und eines Säureakzeptors geschehen, wobei man als Säureakzeptor beispielsweise ein tertiäres Amin verwendet und als Lösungsmittel solche einsetzt, die gegebenenfalls auch den Säureakzeptor lösen, das Polymer

lösen oder zumindest stark zu quellen vermögen. Als organische Lösungsmittel finden insbesondere Halogenkohlenwasserstoffe wie Methylenchlorid, Chloroform, 1,1,2-Trichloräthan, sym-Tetrachloräthan oder Acetonitril, Tetramethylensulfon, Methyläthylketon, Propionitril, Dimethylcyanamid, Diäthylcyanamid sowie Dimethylformamid, Dimethylacetamid oder N-Methylpyrrolidon Verwendung.

Geeignete aromatische Polyimide im Sinne der Erfindung sind beispielsweise Polyimide auf Basis von aromatischen Dianhydriden, wie Pyromellitsäureanhydrid, dem Dianhydrid der 3,3',4,4'-Diphenyltetracarbonsäure oder dem Dianhydrid der 3,3',4,4'-Diphenyläthertetracarbonsäure und aromatischen Polyaminen insbesondere Diaminen wie 4,4'-Diaminodiphenyloxid, p- oder m-Phenylendiamin oder 4,4'-Diaminodiphenylsulfon. Die Polyimide werden beispielsweise durch Polykondensation eines aromatischen Dianhydrids mit einem aromatischen Diamin in Gegenwart eines Lösungsmittels wie Dimethylacetamid, Dimethylformamid, Dimethylsulfoxid oder N-Methylpyrrolidon hergestellt, wobei zunächst eine Polyamidsäure als lösliches Prepolymeres mit einer intrinsic-Viskosität von 0,4 bis 0,8 entsteht (vgl. N.A. Adrova et. al. "Polyimids, a new class of heat-resistant polymers", S. 4-20, Jerusalem 1969). Die Polyamidcarbonsäure wird anschließend bei erhöhten Temperaturen unter Wasserabspaltung zum Polyimid umgewandelt, wobei meist konzentrierte Schwefelsäure oder konzentrierte Phosphorsäure als Kondensationshilfsmittel verwendet werden (vgl. E. Beer "Hochtemperaturbeständige Kunststoffe", S. 77 ff., Carl Hanser Verlag, München, 1969). Die erfindungsgemäß geeigneten Polyimide sollen mittlere Molekulargewichte $\bar{M}_w$ (Gewichtsmittel) zwischen 15 000 bis 100 000 besitzen.

Geeignete Polyarylensulfide im Sinne der Erfindung sind beispielsweise solche, die durch Umsetzung eines Aryldihalogenids mit einem Alkalimetallsulfid in N-Alkyllactamen wie beispielsweise N-Methyl-pyrrolidon in Gegenwart von katalytischen Mengen eines Alkalicarboxylats wie Natriumacetat oder Natriumbenzoat bei Temperaturen von 180 bis 285°C erhalten werden; insbesondere Polyphenylensulfid und ganz besonders jedoch Poly-(p-phenylen)-sulfid. Die geeigneten Polyarylsulfide besitzen relative Lösungsviskositäten von mindestens 1,095, vorzugsweise zwischen 1,10 und 1,15, gemessen bei 206°C in eine Lösung von 0,4 g Polyarylensulfid in 100 ml 1-Chlornaphthalin (vgl. DOS 2 453 749).

Die erfindungsgemäßen Polycarbonatformmassen enthalten die Zusätze b), c), d) und e) in folgenden Mengen bezogen jeweils auf das Gesamtgewicht der Polycarbonatlegierung:

| | | | | |
|---|---|---|---|---|
| den Zusatz b) | in Mengen | von | 0,01 bis 5 Gew.-%, |
| vorzugsweise | " " | " | 0,1 bis 2 Gew.-%, |
| insbesondere | " " | " | 0,2 bis 1 Gew.-%, |
| den Zusatz c) | " " | " | 0,02 bis 1 Gew.-%, |
| vorzugsweise | " " | " | 0,04 bis 0,5 Gew.-%, |
| insbesondere | " " | " | 0,05 bis 0,2 Gew.-%, |

| | | | | |
|---|---|---|---|---|
| den Zusatz d) | in Mengen | von | 0,01 bis 3 Gew.-%, |
| vorzugsweise | " " | " | 0,03 bis 1 Gew.-%, |
| insbesondere | " " | " | 0,05 bis 0,7 Gew.-%, |
| den Zusatz e) | " " | " | 1,0 bis 10 Gew.-%, |
| vorzugsweise | " " | " | 3,0 bis 10 Gew.-%, |
| insbesondere | " " | " | 5,0 bis 10 Gew.-%. |

Die Gesamtzusammensetzung der erfindungsgemäßen flammwidrigen Polycarbonat-Legierungen wird so gewählt, daß die Zusätze b, c, d und e sich mit dem zugrundeliegenden Polycarbonat a) zu 100 Gew.-% ergänzen, was bedeutet, daß die Polycarbonatkomponente a) in Mengen zwischen 81 und 98,96 Gew.-%, bezogen auf Gesamtgewicht der Fünfkomponentenmischung, vorliegen kann.

Durch die Zugabe der Komponente e) können ohne Beeinflussung der Flammwidrigkeit der erfindungsgemäßen Polycarbonatformmassen deren Wärmeformbeständigkeit um mindestens 4°C, vorzugsweise jedoch um 5° bis 12°C verbessert werden.

Die Herstellung der erfindungsgemäßen Formmassen kann auf beliebige Weise erfolgen. Sie können in einem einstufigen Mischvorgang durch gleichzeitiges Zusammenmischen aller erfindungsgemäßen Komponenten oder durch sukzessives Zusammenmischen der Einzelkomponenten beispielsweise in Ein- oder Doppelwellenextrudern hergestellt werden.

So können die erfindungsgemäßen Formmassen hergestellt werden, indem man zu einer Mischung aus der Komponente a) und einer der Komponenten b) bis e) die restlichen Komponenten gleichzeitig oder sukzessive zugibt.

Weiterhin können die erfindungsgemäßen Formmassen hergestellt werden, indem man die Komponenten b) bis e) mit einer Teilmenge der Komponente a) abmischt und diese Mischung mit der Restmenge der Komponente a) vereinigt.

Darüber hinaus kann die Herstellung der erfindungsgemäßen Formmassen so erfolgen, daß man zu einer Mischung der Komponente a) mit zwei der Komponenten b) bis e) die restlichen Komponenten gleichzeitig oder sukzessive zugibt.

Die Mischung der Komponenten kann erfolgen:

1) durch simultanes oder sukzessives Mischen der Einzelkomponenten a) bis e) und gemeinsames Extrudieren,

2) durch Lösen der Thermoplasten a) und e) in einem für den jeweiligen Thermoplasten geeigneten Lösungsmittel und anschließendes Ausdampfen der flüssigen Phasen und nachfolgender simultaner oder sukzessiver Zugabe der restlichen Komponenten b), c) und d) während des Extrudierens,

3) durch Herstellung eines Konzentrates aus den Komponenten b), c) und d) mit einer Teilmenge der Komponenten a) und nachfolgende Vereinigung mit der Restmenge a) unter simultaner oder sukzessiver Zugabe der Komponente e) während des Extrudierens,

4) durch Vermischen zweier Konzentrate (I) und (II), wobei

(I) bestehend aus Mischungen der Komponente e) mit einem Teil der Komponenten b), c) und/oder d) und wobei

(II) bestehend aus Mischungen einer Teilmenge der Komponente a) mit den jeweils komplementären Teil der Komponenten b), c) und/oder d) und

anschließende Verdünnung der beiden Konzentrate (I) und (II) durch die erforderliche Restmenge an Polycarbonat gemäß der Komponente a) während des Extrudiers.

Die erfindungsgemäßen Formmassen können während oder nach ihrer Herstellung nach den üblichen thermoplastischen Verarbeitungsmethoden wie durch Extrusion zu Formteilen und Folien mit verbesserter Flammwidrigkeit und erhöhter Temperaturbeständigkeit verarbeitet werden. Darüber hinaus können sie zu Gießfolien verarbeitet werden.

Die erfindungsgemäßen flammwidrigen Polycarbonatlegierungen können außerdem andere Materialien wie antistatische Mittel, Pigmente, Formtrennmittel,

thermische Stabilisatoren, Ultraviolettlichtstabilisatoren und verstärkende Füllstoffe zugemischt enthalten.

Die zugesetzten Thermoplastkomponenten e) können ebenfalls in der üblichen Weise stabilisiert sein.

Die Verwendung der erfindungsgemäßen Formmassen kann überall dort erfolgen, wo bislang flammwidrige Polycarbonate mit Erfolg verwendet werden (z.B. im Elektrosektor und im Maschinenbausektor). Darüber hinaus können die erfindungsgemäßen Formmassen je nach Modifizierung mit den speziellen Komponenten e) dort eingesetzt werden, wo beispielsweise eine erhöhte Wärmeformbeständigkeit verlangt wird, beispielsweise zur Herstellung von Formteilen in der Automobilindustrie, die nach dem Einbrennverfahren lackiert werden müssen oder zur Herstellung von Leuchtröhren- und Lampenfassungen.

Die in den nachfolgenden Beispielen nach den oben beschriebenen Verfahren erhaltenen erfindungsgemäßen flammwidrigen Polycarbonatlegierungen wurden bei 280°C extrudiert und zu Granulat zerkleinert.

Die Prüfung der Wärmeformbeständigkeit erfolgte durch Bestimmung des Vicat-Erweichungspunktes VSP, auch Vicat B-Temperatur genannt, gemäß DIN 53 460 oder ASTM D 1525-65 T oder ISO-R/75 an Probekörpern mit den Abmessungen 10 mm x 10 mm x 3 mm.

Die Prüfung der Flammwidrigkeit erfolgte nach dem Testverfahren gemäß Underwriters Laboratories, Inc. Bulletin 94, Verbrennungstest zur Klassefizierung von Materialien (kurz UL-94 genannt). Hierbei werden aus Granulat der erfindungsgemäßen flammwidrigen Polycarbonatlegierungen im Spritzgußverfahren bei 300-310°C Teststäbe von zwei Probedicken von 1,6 mm und 3,2 mm hergestellt und nach UL-94 geprüft.

Gemäß diesem Testverfahren wurden die so geprüften Materialien entweder mit UL-94 V-O, UL-94 V-I und UL-94 V-II klassifiziert, und zwar auf der Basis der mit den 10 Proben erhaltenen Ergebnisse. Die Kriterien für jede dieser V-Klassifizierung gemäß UL-94 sind kurz wie folgt:

UL-94 V-O Das durchschnittliche Flammen und/oder Glühen nach Entfernung der Zündflamme soll 5 Sekunden nicht überschreiten und keine der Proben soll Teilchen abtropfen, die absorbierende Baumwolle entzünden.

UL-94 V-I Das durchschnittliche Flammen und/oder Glühen nach Entfernung der Zündflamme soll 25 Sekunden nicht überschreiten und keine der Proben soll Teilchen abtropfen, die absorbierende Baumwolle entzünden.

UL-94 V-II Das durchschnittliche Flammen und/oder Glühen nach Entfernung der Zündflamme soll 25 Sekunden nicht überschreiten und die Proben tropfen flammende Teilchen ab, welche absorbierende Baumwolle entzünden

Weiterhin wurde ein Teststab, der mehr als 25 Sekunden nach Entfernung der Zündflamme brannte, nicht nach Ul-94 klassifiziert, sondern derselbe wurde nach den Standardbedingungen der vorliegenden Erfindung als "brennt" bezeichnet. Die Vorschrift UL-94 erfordert weiterhin, daß alle Teststäbe eines Versuchs die jeweilige V-Bewertung erfüllen müssen, anderenfalls erhalten die 10 Teststäbe die Bewertung des schlechtesten Einzelstabes. Wenn beispielsweise 1 Stab mit UL-94 V-II bewertet wird und die anderen 9 Teststäbe mit UL-94 V-O bewertet werden, dann erhalten alle 10 Stäbe die Bewertung UL-94 V-II.

Die Ergebnisse sind in den Beispielen der nachfolgenden Tabelle 1 zusammengestellt. Das in den Beispielen verwendete aromatische Polycarbonat ist ein Homopolycarbonat auf Basis von Bisphenol A mit einem Molekulargewicht $\bar{M}_w$ von 30.000.

Die Beispiele 1,2 und 3 dienen als Vergleichsbeispiele.

Tabelle 1

| Bei-spiele | Flammhemmende Zusätze b, c, d | Gew.-% | Thermoplast-zusätze e | Gew.-% | UL-94 1,6 mm | 3,2 mm | Formbeständigkeit in der Wärme (ISO-R/75) (°C) |
|---|---|---|---|---|---|---|---|
| 1 | N-Methyltetrachlorphthalimid | 0,50 | - | - | V-O | V-O | 142 - 143°C |
| | Trinatrium-hexafluoroaluminat | 0,25 | | | | | |
| | Hostaflon TF 2026 (1) | 0,10 | | | | | |
| 2 | N-Methyltetrachlorphthalimid | 0,25 | - | - | V-O | V-O | 142 - 143°C |
| | Trikalium-hexafluoroaluminat | 0,25 | | | | | |
| | Hostaflon TF 2053 (1) | 0,10 | | | | | |
| 3 | N-Methyltetrabromphthalimid | 0,10 | - | - | V-O | V-O | 142 - 143°C |
| | Trinatriumhexafluoroaluminat | 0,25 | | | | | |
| | Hostaflon TF 2026 | 0,10 | | | | | |
| 4 | N-Methyltetrachlorphthalimid | 0,50 | Polysulfon-Udel 1700 (2) | 6 | V-O | V-O | 149 - 150°C |
| | Trinatriumhexafluoroaluminat | 0,25 | | | | | |
| | Hostaflon TF 2026 | 0,10 | | | | | |
| 5 | N-Methyltetrabromphthalimid | 0,10 | Polysulfon-Udel 1700 | 8 | V-O | V-O | 151 - 152°C |
| | Trinatriumhexafluoroaluminat | 0,25 | | | | | |
| | Hostaflon TF 2053 | 0,10 | | | | | |

Tabelle 1 (Fortsetzung)

| Bei-spiele | Flammhemmende Zusätze b, c, d | Gew.-% | Thermoplast-zusätze e | Gew.-% | UL-94 1,6 mm | UL-94 3,2 mm | Formbeständigkeit in der Wärme (Iso-R/75) (°C) |
|---|---|---|---|---|---|---|---|
| 6 | N-Methyltetrachlorphthalimid<br>Trinatriumhexafluoroaluminat<br>Hostaflon TF 2026 | 0,50<br>0,25<br>0,10 | Polycarbonat auf Basis von Tetramethyl-Bisphenol A mit $M_W$ = 30.000 | 5 | V-O | V-O | 149 - 151°C |
| 7 | N-Methyltetrabromphthalimid<br>Trinatriumhexafluoroaluminat<br>Hostaflon TF 2026 | 0,10<br>0,25<br>0,10 | Polycarbonat auf Basis von Tetramethyl-Bisphenol A mit $M_W$=30.000 | 8,0 | V-O | V-O | 152 - 153°C |
| 8 | N-Methyltetrachlorphthalimid<br>Trinatriumhexafluoroaluminat<br>Hostaflon TF 2026 | 0,50<br>0,25<br>0,10 | U-Polymer(3) (aromatischer Polyester) ($\eta$ rel = 1,270) | 3,0 | V-O | V-O | 148 - 149°C |
| 9 | N-Methyltetrabromphthalimid<br>Trinatriumhexafluoroaluminat<br>Hostaflon TF 2026 | 0,10<br>0,25<br>0,10 | " | 8,0 | V-O | V-O | 152 - 153°C |

(1): Polytetrafluoräthylen: Hersteller: Hoechst AG, Bundesrepublik Deutschland, $\bar{M}_w > 100\,000$; hergestellt aus Tetrafluoräthylen durch Polymerisation.

(2): Polysulfon: Hersteller: Union Carbide Corp., USA, $\bar{M}_w = 42\,000$, hergestellt aus Bis-2,2-(4-hydroxyphenyl)-propan und Bis-(4-chlorphenyl)-sulfon.

(3): Aromatischer Polyester auf Basis von Bisphenol A und einem Gemisch aus Iso- und Terephthalsäure im Gewichtsverhältnis 1:1, Hersteller: Unitika, Japan, $\bar{M}_w = 30\,000$, hergestellt, indem man Bisphenol A und Iso- und Terephthalsäurechlorid in Gegenwart von wässrigen Alkalihydroxidlösungen nach dem Zweiphasengrenzflächenverfahren polykondensiert.

Patentansprüche

1. Formassen, bestehend aus

a) thermoplastischen aromatischen Polycarbonaten auf Basis von Bis-(hydroxyaryl)-alkanen
Bis-(hydroxyarly)-cycloalkanen
4,4'-Dihydroxy-diphenyläther oder
4,4'-Dihydroxy-diphenylsulfid,

b) einer organischen Halogenverbindung,

c) einem Alkali- oder Erdalkalisalz einer anorganischen Protonensäure und/oder einer organischen Brönsted-Säure mit mindestens einem Kohlenstoffatom,

d) einem Stoff, der die Abtropfneigung von Polycarbonaten reduziert,

dadurch gekennzeichnet, daß sie

e) weitere Thermoplasten mit einer Wärmeformbeständigkeit, gemessen nach ISO-R/75 von $\geqslant 175^{o}C$ (Vicat-B-Temperatur) enthalten.

2. Formmassen gemäß Anspruch 1, dadurch gekennzeichnet, daß sie die Polycarbonatkomponente a) in Mengen von 81 bis 98,96 Gew.-%, bezogen auf die Summe der Komponenten a+b+c+d+e, enthalten.

3. Formmassen gemäß Anspruch 1, dadurch gekennzeichnet, daß sie die organische Halogenverbindung b) in Mengen von 0,01 bis 5 Gew.-%, bezogen auf die Summe der Komponenten a+b+c+d+e, enthalten.

4. Formmassen gemäß Anspruch 1, dadurch gekennzeichnet, daß sie die Alkali- und/oder Erdalkalisalze c) einer anorganischen Säure oder einer organischen Brönsted-Säure mit mindestens einem Kohlenstoffatom in Mengen von 0,02 bis 1 Gew.-%, bezogen auf die Summe der Komponenten a+b+c+d+e, enthalten.

5. Formmassen gemäß Anspruch 1, dadurch gekennzeichnet, daß sie den die Abtropfneigung von Polycarbonaten reduzierenden Zusatz d) in Mengen von 0,01 bis 3 Gew.-%, bezogen auf die Summe der Komponenten a+b+c+d+e, enthalten.

6. Formmassen gemäß Anspruch 1, dadurch gekennzeichnet, daß sie als weitere Thermoplasten e) Polyarylensulfone, Polyarylenäthersulfone, Polyarylensulfide, Polycarbonate auf Basis von Tetramethylbisphenolen, Polycarbonate auf Basis von 4,4'-Dihydroxydiphenylsulfon, aromatische Polyamide, aromatische Polyimide oder aromatische Polyester in Mengen von 1,0 bis 10 Gew.-%, bezogen auf die Summe der Komponenten a+b+c+d+e, enthalten.

7. Verfahren zur Herstellung von Formmassen gemäß den Ansprüchen 1 bis 6, dadurch gekennzeichnet, daß man entweder

1) zu einer Mischung aus der Komponente a) und einer der Komponenten b) bis e) die restlichen Komponenten gleichzeitig oder sukzessive zugibt,

oder 2) die Komponenten b) bis e) mit einer Teilmenge der Komponente a) abmischt und diese Mischung mit der Restmenge der Komponente a) vereinigt,

oder 3) indem man zu einer Mischung der Komponente a) mit zwei der Komponenten b) bis e) die restlichen Komponenten gleichzeitig oder sukzessive zugibt.

8. Verwendung der Formmassen gemäß den Ansprüchen 1 bis 6, gegebenenfalls nach Zusatz von antistatischen Mitteln, Pigmenten, Formtrennmitteln, thermischen Stabilisatoren, Ultraviolettlichtstabilisatoren und verstärkenden Füllstoffen, zur Herstellung von Formteilen und Folien.

9. Verwendung der Formmassen gemäß den Ansprüchen 1 bis 8 zur Herstellung von Formteilen und Folien durch Spritzguß beziehungsweise Extrusion.

10. Verwendung der Formmassen gemäß den Ansprüchen 1 bis 8 zur Herstellung von Gießfolien.